# EUROPEAN PATENT SPECIFICATION

(11) **EP 3 972 391 B1**
(45) Date of publication and mention of the grant of the patent: **16.08.2023**
(21) Application number: 20196957.3
(22) Date of filing: 18.09.2020
(51) Int. Cl.: H05B 47/105

(54) **MODELING ENVIRONMENTAL CHARACTERISTICS BASED ON SENSOR DATA OBTAINABLE IN A LIGHTING SYSTEM**
MODELLIERUNG VON UMGEBUNGSEIGENSCHAFTEN BASIEREND AUF SENSORDATEN, DIE IN EINEM BELEUCHTUNGSSYSTEM ERHÄLTLICH SIND
MODÉLISATION DE CARACTÉRISTIQUES ENVIRONNEMENTALES SUR LA BASE DE DONNÉES DE CAPTEURS POUVANT ÊTRE OBTENUES DANS UN SYSTÈME D'ÉCLAIRAGE

(43) Date of publication of application: 23.03.2022
(73) Proprietor: Helvar Oy Ab, 02150 Espoo (FI)
(72) Inventor: JUSLÉN, Henri, 02150 ESPOO (FI); HATTAB, Adel, 02150 ESPOO (FI); NASIR, Omar, 02150 ESPOO (FI)
(74) Representative: Berggren Oy

(56) References cited:
- WO-A1-2012/137046
- US-A1- 2012 066 168
- US-B1- 10 021 771

## Description

### TECHNICAL FIELD

The example and non-limiting embodiments of the present invention relate to operation of a building automation system and, in particular, to controlling operation of the building automation system in accordance with sensor data acquired via usage of a lighting system included in or coupled to the building automation system.

### BACKGROUND

In many modern lighting systems luminaires arranged for illuminating a space are arranged into a lighting network where the luminaires may be able to communicate with each other and/or with a lighting control entity such as a lighting system controller and/or a lighting control gateway that may link the luminaire(s) to a lighting control server. Such a lighting network may be based on wireless or wired communication between respective entities of the lighting network, e.g. on respective wireless links, on a wireless network or on a wired network or bus.

The lighting system may further comprise, for example, sensors arranged for observing environmental parameters such as occupancy status in the space, (ambient) light level in the space, temperature in the space, humidity in the space, air pressure in the space, air quality in the space, sound pressure in the space, etc., where respective sensor data obtained from such sensors may be applied in controlling at least some aspects of operation of the lighting system and/or the sensor data may be provided as control information for other systems operated in the space, such as a HVAC system. The sensors may be provided together with the luminaires and/or independently of the luminaires of the lighting network. In the former case, sensor data obtained from a sensor unit may be applied for lighting control locally in the respective luminaire and/or the sensor data may be provided to the lighting control entity to assist lighting control actions that may concern one or more luminaires of the lighting system, whereas in the latter case the sensor data may be first provided to the lighting control entity, which in turn makes use of the sensor data for lighting control that concerns of one or more luminaires of the lighting system.

Availability of sensor data pertaining to environmental characteristics within a space the lighting system serves to illuminate provides various possibilities for enhancing the current and future operation of the lighting system and/or other services (such as the HVAC system) operated in the space. An example in this regard improves defining and using a model that enables modeling or predicting current and/or future environmental conditions within the space, which in turn facilitates ensuring satisfactory lighting conditions and/or other environmental conditions in the space in a proactive manner.

However, when the sensor data is collected from a large number of sensors over prolonged period of time to enable defining and using such a model, the lighting system needs to deal with a huge amount of data that results in costs arising from storing and processing the sensor data, whereas on one hand part of the sensor data may be redundant in terms of defining and/or applying the model while on the other hand irregularities in the available sensor data (e.g. data from some of the sensors unavailable for some periods of time) may compromise performance of the applied model.

In related art, US 2012/066168 A1 discloses systems and methods for predicting and/or detecting occupancy of an enclosure, such as a dwelling or other building, which can be used for a number of applications. An a priori stochastic model of occupancy patterns based on information of the enclosure and/or the expected occupants of the enclosure is used to pre-seed an occupancy prediction engine. Along with data from an occupancy sensor, the occupancy prediction engine predicts future occupancy of the enclosure. Various systems and methods for detecting occupancy of an enclosure, such as a dwelling, are also described.

### SUMMARY

It is an object of the present invention to provide a technique that facilitates processing of sensor data obtained in the course of operation of a lighting system in a manner that facilitates computationally efficient, reliable and accurate modeling of environmental conditions in the space the lighting system serves to illuminate.

According to an example embodiment, a method in a lighting system is provided, wherein the lighting system comprises a plurality of luminaires arranged for illuminating one or more spaces and a plurality of sensor units, each including respective one or more sensors arranged to observe respective environmental characteristics in their respective locations in said one or more spaces the method comprising: carrying out a learning procedure to define a model of one or more aspects of environmental conditions in a portion of said one or more spaces based on respective time portions of a respective plurality of time series of sensor values originating from a first plurality of said sensors; evaluating, for each of said first plurality of said sensors, a respective strength of a match between the time series of sensor values originating from the respective sensor and said model; selecting a second plurality of said sensors as a subset of the first plurality of said sensors based at least in part on the respective strengths of the matches between the time series of sensor values and the model; and applying said model to control one or more aspects of a building automation system based on a further plurality of time series of sensor values received from the second plurality of said sensors, each respective time series of sensor values received after said respective time portions of the respective plurality of time series of sensor values originating from the first plurality of said sensors.

According to another example embodiment, an apparatus for controlling one or more aspects of a building automation system is provided, wherein controlling is based at least in part on sensor data obtained from a lighting system comprising a plurality of luminaires arranged for illuminating one or more spaces and a plurality of sensor units, each including respective one or more sensors arranged to observe respective environmental characteristics in their respective locations in said one or more spaces, the apparatus comprising means for performing the following: carry out a learning procedure to define a model of one or more aspects of environmental conditions in a portion of said one or more spaces based on respective time portions of a respective plurality of time series of sensor values originating from a first plurality of said sensors; evaluate, for each of said first plurality of said sensors, a respective strength of a match between the time series of sensor values originating from the respective sensor and said model; select a second plurality of said sensors as a subset of the first plurality of said sensors based at least in part on the respective strengths of the matches between the time series of sensor values and the model; and apply said model to control one or more aspects of the building automation system based on a further plurality of time series of sensor values received from the second plurality of said sensors, each respective time series of sensor values received after said respective time portions of the respective plurality of time series of sensor values originating from the first plurality of said sensors.

According to another example embodiment, a lighting system is provided, the lighting system comprising an apparatus according to the example embodiment described in the foregoing, the plurality of luminaires (120) and the plurality of sensor units (140).

According to another example embodiment, a computer program is provided, the computer program comprising computer readable program code configured to cause performing at least the method according to the example embodiment described in the foregoing when said program code is executed on one or more computing apparatuses.

The computer program according to the above-described example embodiment may be embodied on a volatile or a non-volatile computer-readable record medium, for example as a computer program product comprising at least one computer readable non-transitory medium having the program code stored thereon, which, when executed by one or more computing apparatuses, causes the computing apparatuses at least to perform the method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A illustrates a block diagram of some logical components of a lighting system according to an example;
Figure 1B illustrates a block diagram of some logical components of a lighting system according to an example;
Figure 2 illustrates a block diagram of some components of a luminaire according to an example;
Figure 3 illustrates a method according to an example; and
Figure 4 illustrates a block diagram of some components of an apparatus according to an example.

### DESCRIPTION OF SOME EMBODIMENTS

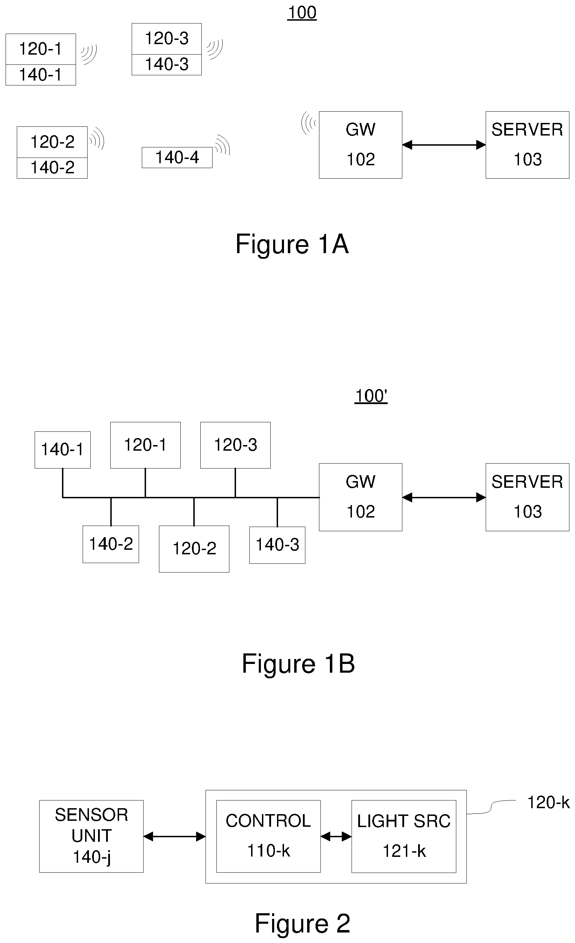

Figure 1A illustrates a block diagram of some logical components of a lighting system 100 according to an example. The lighting system 100 may be arranged for illuminating one or more spaces of a building, such as an office building, a public building (such as a school, a library, a hospital, ...), a warehouse, a shopping mall, a sports venue, etc. The lighting system 100 as illustrated in Figure 1A includes luminaires 120-1, 120-2, 120-3, sensor units 140-1, 140-2, 140-3, 140-4, a gateway 102 and a server 103. The luminaires 120-1 to 120-3 represent a plurality of luminaires 120, where an individual luminaire may be referred to via a reference number 120-k. Each luminaire 120-k may be arranged for illuminating a respective portion of said one or more spaces. The luminaires 120-k are communicatively coupled to the gateway 102 and to each other, where the communicative couplings may be provided via a wireless communication medium, e.g. via a wireless communication network and/or via respective wireless links. The lighting system 100 may be provided as part of a building automation system that may also include other services or functionalities available in the one or more spaces, such as a HVAC system.

The sensor units 140-1 to 140-4 represent a plurality of sensor units 140, where an individual sensor unit may be referred to via a reference number 140-j. Each sensor unit 140-j comprises respective one or more sensors for observing respective environmental characteristics at a respective location in the one or more spaces. The example of Figure 1A illustrates sensor units 140-k of two kinds: the sensor units 140-1, 140-2 and 140-3 may be considered as integrated sensor units that are provided as part of (or otherwise together with) respective luminaires 120-1, 120-2 and 120-3 and that are applicable for local lighting control at the respective luminaire and that may be applicable for centralized control e.g. by the gateway 102, whereas the sensor unit 140-4 may be considered a stand-alone sensor unit 140 that may be applicable for centralized control e.g. by the gateway 102. In general, the lighting system 100 may comprise a plurality of integrated sensor units and/or a plurality of stand-alone sensor units. An integrated sensor unit provided with the luminaire 120-k may be communicatively coupled to the gateway 102 and to other (ones of the plurality of) luminaires 120 via the luminaire 120-k, whereas a stand-alone sensor unit may be communicatively coupled to the gateway 102 and to the luminaires 120-k directly (i.e. without using any of the luminaires 120-k as an intermediate element), where the communicative couplings may be provided via a wireless communication medium, e.g. via a wireless communication network and/or via respective wireless links.

The plurality of luminaires 120 (with their respective integrated sensor units), the plurality of the stand-alone sensor units and the gateway 102 may be considered as nodes of a lighting network within the lighting system 100. The gateway 102 is communicatively coupled to the server 103, e.g. via a communication network such as the Internet. The lighting network is hence coupled to the server 103 via the gateway 102.

The lighting system 100 may apply the communicative coupling between the sensor units 140-j and the gateway 102 to transfer at least part of the sensor data obtained in the sensor units 140-j to the gateway 102, whereas the gateway 102 may be provided for processing sensor data received from the plurality of sensor units 140 and for adjusting or controlling one or more aspects of operation of the lighting system 100 based on the received sensor data. The gateway 102 may further serve to couple the lighting network to the server 103, to provide at least part of the sensor data received from the plurality of sensor units 140 to the server 103 and/or to receive analysis results and/or lighting control information from the server 103.

Figure 1B illustrates a block diagram of some logical components of a lighting system 100' according to an example, which is a variation of the lighting system 100. Therein, elements of the lighting network, e.g. the luminaires 120-k, the sensor units 140-j and the gateway 102 are considered as respective stand-alone elements that are communicatively coupled to each other via a wired communication medium, e.g. via a wired bus (as illustrated in the non-limiting example of Figure 1B).

Figure 2 illustrates a block diagram of some logical components of a luminaire 120-k according to an example. The luminaire 120-k comprises a lighting control device 110-k and at least one light source 121-k. The lighting control device 110-k comprises a lighting control means for controlling the light output from the at least one light source 121-k and a communication means for wired or wireless communication with other devices, e.g. with other nodes of the lighting network. The lighting control device 110-k or the lighting control means therein may be provided by hardware means or by a combination of hardware means and software means, e.g. as an entity comprising a memory and a processor, where the memory comprises program code that is executable by the processor to enable controlling at least some aspects of operation of the luminaire 121-k. In the illustration of Figure 2 the luminaire 120-k is coupled to the sensor unit 140-j, which thereby serves as an integrated sensor unit provided together with the luminaire 120-k.

In a non-limiting example, the at least one light source 121-k comprises one or more light emitting diodes (LEDs) and the lighting control device 110-k comprises or is provided as a LED driver device, whereas in another non-limiting example the at least one light source 121-k comprises one or more fluorescent lamps and the lighting control device 110-k comprises or is provided as an electronic ballast. The luminaire 120-k or an element thereof may have a device identifier (ID) assigned thereto, which may be also referred to as a luminaire ID. The luminaire ID may comprise e.g. an address, a serial number, a name, etc. assigned to the luminaire 120-k or to a component thereof. The luminaire ID of the luminaire 120-k may be stored, for example, in a memory provided in the luminaire 120-k and the luminaire ID assigned to the luminaire 120-k may be applied in communication with other nodes of the lighting network.

Along the lines described in the foregoing, the sensor unit 140-j comprises respective one or more sensors for observing respective environmental characteristics at a respective location in the one or more spaces. Each of the sensors may be arranged to capture and/or derive a respective sensor signal that is descriptive of respective environmental characteristics at the location of the respective sensor unit 140-j as a function of time, where the sensor signal may comprise e.g. a respective time series of sensor values. Hence, the sensor data acquired by the sensor unit 140-j may comprise respective time series of sensor values captured and/or derived using the one or more sensors of the sensor unit 140-j. The sensor unit 140-j or an element thereof may have a device identifier (ID) assigned thereto, which may be also referred to as a sensor unit ID. The sensor unit ID may comprise e.g. an address, a serial number, a name, etc. assigned to the sensor unit 140-j or to a component thereof. The sensor unit ID of the sensor unit 140-j may be stored, for example, in a memory provided in the sensor unit 140-j and the sensor unit ID assigned to the sensor unit 140-j may be applied in communication with other nodes of the lighting network.

Typically, the sensor unit includes an occupancy sensor (e.g. a passive infrared (PIR) sensor) for monitoring an occupancy status (e.g. one of occupancy or non-occupancy) in a respective location of the one or more spaces and a light sensor (e.g. a photodetector such as a photodiode) for observing ambient light level in the respective location of the one or more spaces. The sensor unit 140-j may further comprise, for example, one or more of the following sensors:
- A carbon dioxide (CO₂) sensor for measuring a CO₂ level in the location of the sensor unit 140-j;
- One or more volatile organic compound (VOC) sensors for measuring respective levels of one or more VOCs in the location of the sensor unit 140-j, for example a mixed VOC sensor arranged to simultaneously monitor respective levels of a plurality of VOC in the space;
- A humidity sensor for measuring humidity in the location of the sensor unit 140-j;
- A temperature sensor for measuring temperature in the location of the sensor unit 140-j;
- A pressure sensor for measuring air pressure in the location of the sensor unit 140-j;
- A microphone or a sound sensor of other type for capturing audio characteristics in the location of the sensor unit 140-j.

In case the sensor unit 140-j is a stand-alone one, it may comprise a control means for controlling operation of the sensor unit 140-j and a communication means for wired or wireless communication with other devices, e.g. with other nodes of the lighting network. In this regard, the sensor unit 140-j may be arranged to transfer at least part of the sensor data acquired therein to the gateway 102 to facilitate centralized lighting control by a lighting control means therein and/or to facilitate analysis of sensor data via operation of the gateway 102 and/or in the server 103. In case the sensor unit 140-j is one integrated to the luminaire 120-k, it may be arranged to provide the sensor data to the lighting control device 110-k, which may be arranged to transfer at least part of the sensor data to the gateway 102. Moreover, in such an arrangement the lighting control means in the lighting control device 110-k may be arranged to locally control light output of the luminaire 120-k based at least in part on sensor data (locally) received from the sensor unit 140-k integrated thereto. Examples of such local control of the light output include switching or keeping the lights on or off in accordance with the sensor signal obtained from the occupancy sensor in the sensor unit 140-k and/or controlling the light output from the luminaire 120-k in view of the sensor signal obtained from the light sensor in the sensor unit 140-k such that a desired light level in the respective location of the one or more spaces is maintained.

The gateway 102 may comprise a lighting control means and a (first) communication means that enables communication with the respective communication means in the lighting control devices 110-k of the luminaires 120-k and in the stand-alone ones of the sensor units 140-j. Moreover, the gateway 102 may comprise second communication means that enables communication with the gateway 103. Alternatively or additionally, the (first) communication means in the gateway 102 may enable communication also with the server 103. The gateway 102 and/or the lighting control means therein may comprise a memory and a processor, where the memory comprises program code that is executable by the processor to implement at least some aspects of the control means. The gateway 102 is to be construed as a logical entity that may be provided as an entity (physically) separate from the plurality of luminaires 120 or it may be provided as part of one of the plurality of luminaires 120.

The lighting control means in the gateway 102 may be arranged to receive the sensor data from the sensor units 140-j and to store the received sensor data, together with associated timing information and the sensor unit ID, in a memory in the gateway 102 for subsequent processing in the gateway 102 and/or for subsequent transmission to the server 103. The lighting control means in the gateway 102 may complement the received sensor data with timing information (e.g. respective timestamps) that indicates the time of their reception at the gateway 102. The lighting control means in the gateway 102 may be further arranged to control one or more aspects of operation of the lighting system 100, 100' based at least in part on the sensor data received from the sensor units 140-j. The gateway 102 may be alternatively referred to, for example, as a lighting control gateway, as a building control gateway or as a building management gateway, depending on characteristics of control actions provided via operation of the gateway 102 and/or on the purpose of sensor data collection carried out via operation of the gateway 102.

As described in the foregoing, the lighting control devices 110-k, the stand-alone ones of the sensor units 140-j and the gateway 102 each comprises the respective communication means to enable wired or wireless communication with other nodes of the lighting network. In case wireless communication is applied in this regard, the communication means may comprise a wireless transceiver that is capable of communicating with respective wireless transceivers in other nodes of the lighting network. The wireless communication may be provided by using a suitable short-range wireless communication technique known in the art that enables communication over ranges from a few meters up to a few hundred meters. Examples of suitable wireless communication techniques include Bluetooth, Bluetooth Low-Energy (LE), ZigBee, WLAN/Wi-Fi according to an IEEE 802.11 family of standards, etc. Further examples include infrared communications and other non-radio-based short-range communication techniques. The choice of the communication technique and network topology for a specific implementation of the lighting arrangement 100 may depend e.g. on the required communication range and/or requirements with respect to energy-efficiency of the communication means. As a concrete non-limiting example, the wireless communication may rely on a wireless mesh network model, for example on a mesh network according to the Bluetooth or Bluetooth LE Mesh networking protocol known in the art.

In case wired communication is applied between nodes of the lighting network, the communication in this regard may be provided via a wired bus using a predefined lighting control protocol, such as the Digital Addressable Lighting Interface (DALI) specified in a series of technical standards IEC 62386, whereas the communication means may comprise a communication interface arranged to provide communication according to the applicable lighting control protocol.

The server 103 may comprise an analysis means for processing the sensor data and a communication means that is able to communicate at least with the respective communication means in the gateway 102 (e.g. the second communication means therein). In this regard, the server 103 may comprise one or more memories and one or more processors, where the one or more memories comprise respective aspects of program code that is executable by the one or more processors to provide the server 103. The server 103 is to be construed as a logical entity that may be provided by one or more computer devices that may be arranged to provide a cloud computing service. The server 103 may be alternatively referred to, for example, as a lighting control server, as a building control server or as a building management server, depending on characteristics of analysis provided via operation of the sever 103 and/or on the purpose of sensor data collection carried out via operation of the server 103.

The server 103 may be arranged to receive, from the gateway 102, the respective sensor data originating from the sensor units 140-j and to store the received sensor data together with the associated timing information and the sensor unit ID in a memory in the server 103 for a subsequent analysis by the analysis means. The analysis may comprise, for example, derivation of a model that enables estimating or predicting one or more aspects of current and/or future environmental conditions in the one or more spaces the lighting system 100, 100' serves to illuminate. The derived model may be subsequently applied in controlling one or more aspects of the building automation system, such as at least in part controlling at least one aspect of operation of the lighting system 100, 100' and/or providing another element of the building automation system with information that facilitates operating other services or functionalities available in the one or more spaces (such as the HVAC system) in an improved manner. Operation of the analysis means is described in further detail described via examples provided in the following.

Along the lines described in the foregoing, the sensor data originating from the sensor units 140-j comprises a respective time series of sensor values from respective one or more sensors of the plurality of sensor units 140 together with respective sensor unit IDs that identify the sensor unit 140-j serving as the origin of the respective sensor data and with respective timing information (e.g. timestamps) that enable defining temporal relationships between time series of sensor values originating from different sensors units 140-j. Hence, the analysis means in the server 103 has the knowledge of history of some aspects of environmental conditions in a plurality of locations within the one or more spaces the lighting system 100, 100' serves to illuminate, whereas at least part of this history data may serve as basis for deriving the model pertaining to one or more aspects environmental conditions in these one or more spaces via carrying out a learning procedure. The history data is collected in the course of operation of the lighting system 100, 100', e.g. when the one or more spaces it serves to illuminate are in their intended (e.g. 'normal') use and a portion of the history data available at the server 103 that is applied as basis for deriving the model may be referred to as learning data.

As an example, the model derivable based on the learning data may enable estimating or predicting one or more aspects of current and/or future environmental conditions in a portion of interest within the one or more spaces the lighting system 100, 100' serves to illuminate. Non-limiting examples of such aspects of environmental conditions include an occupancy status (e.g. occupancy or non-occupancy) in the one or more spaces, an estimate of the number of people currently residing on the one or more spaces, a CO₂ level or another measure of air quality in the one or more spaces, sound pressure level in the one or more spaces, etc. Moreover, the portion of interest within the one or more spaces may include the one or more spaces in their entirety or it may include only one or more predefined portions thereof. As an example, such one or more predefined portions of the one or more spaces may include one or more of the following: one or more office rooms, meeting rooms and/or classrooms, one or more corridors and/or staircases, one or more portions of an open office, etc. Consequently, the model may be applied to control one or more aspects of the building automation system, e.g. one or more aspects of operation of the lighting system 100, 100' and/or to assist controlling one or more other services or functionalities available in the one or more spaces, such as the HVAC system. Non-limiting examples concerning application of the model include the following:
- estimating a current occupancy status in the portion of interest within the one or more spaces,
- predicting an occupancy status in the portion of interest within the one or more spaces for a predefined future time,
- estimating the current number of people in the portion of interest within the one or more spaces,
- predicting the number of people in the portion of interest within the one or more spaces for a predefined future time,
- estimating a current CO₂ level or another measure of air quality in the portion of interest within the one or more spaces,
- predicting a CO₂ level or another measure of air quality in the portion of interest within the one or more spaces for a predefined future time,
- estimating a current sound pressure level in the portion of interest within the one or more spaces,
- predicting a sound pressure level in the portion of interest within the one or more spaces for a predefined future time.

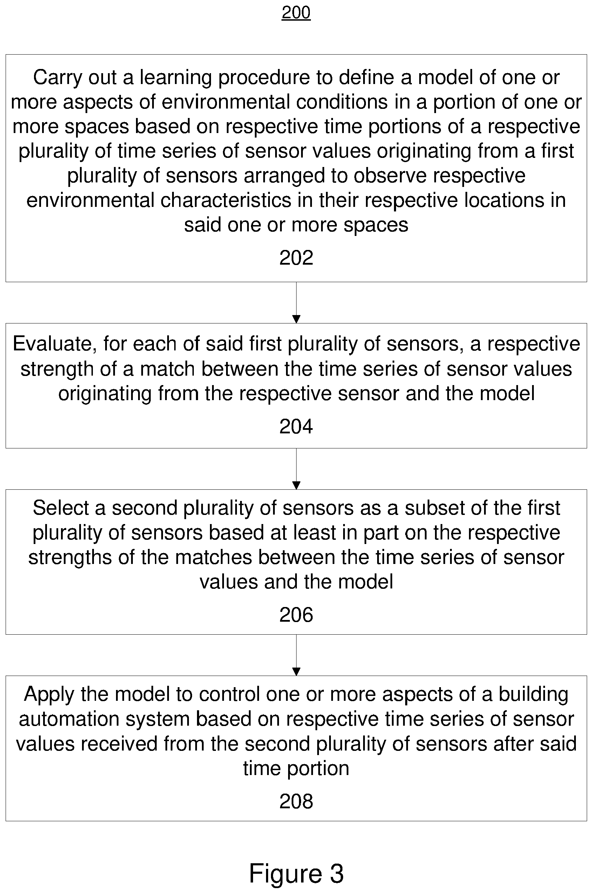

According to an example, the learning procedure may be carried out and subsequently applied according to a method 200 that is illustrated by the flowchart depicted in Figure 3. In this regard, operations described with references to block 202 to 206 of the method 200 pertain to the learning procedure, whereas operations described with references to block 208 pertain to applying the derived model. The learning procedure in accordance with the method 200 may be carried out in the course of operation of the lighting system 100, 100' based on learning data collected in the course of operation of the lighting system 100, 100' and it may be carried out in response to a request or command by an operator of the lighting system 100, 100'. Although described herein as a method carried out by the server 103, in general the method 200 may be carried out by the gateway 102, by another (single) entity included in or coupled to the lighting network and/or jointly by two or more other entities included in or communicatively coupled to the lighting control network of the lighting system 100, 100'. As an example of the latter, operations pertaining to the method 200 may be distributed between two or more entities of the lighting system 100, 100', e.g. the gateway 102 and the server 103.

The method 200 comprises carrying out a learning procedure to define a model of one or more aspects of environmental conditions in a portion of one or more spaces based on respective time portions of a respective plurality of time series of sensor values originating from a first plurality of sensors arranged to observe respective environmental characteristics in their respective locations in said one or more spaces, as indicated in block 202, and evaluating, for each of said first plurality of sensors, a respective strength of a match between the time series of sensor values originating from the respective sensor and the model, as indicted in block 204. The method 200 further comprises selecting a second plurality of sensors as a subset of the first plurality of sensors based at least in part on the respective strengths of the matches between the time series of sensor values and the model, as indicted in block 206, and applying the model to control one or more aspects of the building automation system based on respective time series of sensor values received from the second plurality of sensors after said time portion, as indicated in block 208.

The respective operations described with references to blocks 202 to 208 pertaining to the method 200 may be implemented, varied and/or complemented in a number of ways, for example as described in the foregoing and/or in the following with references to structure and operation of the lighting system 100, 100'.

Referring back to operations pertaining to block 202, the respective plurality of time series of sensor values originating from the first plurality of sensors serving as learning data applied in the learning procedure may comprise a spatial and/or temporal subset of the history data available at the server 103: in terms of the 'temporal dimension' the learning data may comprise, for each sensor of the first plurality of sensors, a time portion of the respective time series of sensor values that covers a training period, whereas in terms of the 'spatial dimension' the learning data may comprise a respective time series of sensor values for all sensors for which respective time series of sensor values is available in the history data or a predefined or selectable subset thereof. Derivation (and subsequent use) of the model does not need to consider and/or does not require knowledge of respective locations of the first plurality of sensors and hence both sensors that are located in the portion of interest within the one or more spaces and sensors that are located outside in the portion of interest within the one or more spaces may contribute to the model.

The number of sensors considered in the learning data may be denoted as *N*₁. The training period may be a predefined one or a selectable one, it may cover a time period from a time instant *t*ₛₜₐᵣₜ to a time instant *t*_{end}, and it may have a duration *T*ₜᵣₐᵢₙ. The duration of the training period may be chosen, for example, in dependence of the amount of learning data, in dependence of the size of the one or more spaces the lighting system 100, 100' serves to illuminate and/or in dependence of the size of the portion of interest within the one or more spaces. As an example, the duration of the learning period may be in a range from a few days to a few weeks, e.g. two weeks.

The first plurality of sensors may include one or more sensors that are located in the portion of interest within the one or more spaces and that provide sensor data that is directly descriptive of the one or more aspects of the environmental conditions the model serves to estimate or predict. As non-limiting examples in this regard, the following scenarios may be applicable:
- an occupancy sensor in the portion of interest within the one or more spaces may provide sensor data that facilitates estimating or predicting aspects of environmental characteristics such as the occupancy status or the number of people in the portion of interest with the one or more spaces;
- a CO2 sensor or a VOC sensor in the portion of interest within the one or more spaces may provide sensor data that facilitates estimating or predicting aspects of environmental characteristics such as the CO2 level or another measure of air quality in the portion of interest within the one or more spaces.

On the other hand, the first plurality of sensors may comprise one or more sensors that are not necessarily located in the portion of interest within the one or more spaces and/or the sensor data originating from the first plurality of sensors may not be directly descriptive of the one or more aspects of the environmental conditions the model serves to estimate or predict. In this regard, a sensor located outside the portion of interest within the one or more spaces and/or providing sensor data that is descriptive of an environmental condition that is only indirectly related to the one or more aspects of the environmental conditions the model serves to estimate or predict may still provide information that facilitates accurate modeling of the relevant aspect(s) of the environmental conditions in the portion of interest within the one or more spaces. As non-limiting examples in this regard, the following scenarios may be applicable:
- an occupancy sensor at a frequently visited location within the one or more spaces (such as a corridor, a lounge, a meeting room area, a staircase, an exit/entrance, etc.) may provide sensor data that facilitates estimating or predicting aspects of environmental characteristics such as occupancy status, the number of people, the CO2 level or another measure of air quality, the sound pressure level, etc. (also) in other locations within the one or more spaces;
- an occupancy sensor within or close to the portion of interest within the one or more spaces may provide sensor data that facilitates estimating or predicting aspects of environmental characteristics such as the CO2 level or another measure of air quality, the sound pressure level, etc. in the portion of interest within the one or more spaces;
- a CO2 sensor or a VOC sensor within or close to the portion of interest within the one or more spaces may provide sensor data that facilitates estimating or predicting aspects of environmental characteristics such as the occupancy status or the number of people in the portion of interest within the one or more spaces.

Hence, the first plurality of sensors considered in the learning procedure may be located inside and/or outside the portion of interest within the one or more spaces, thereby enabling taking into account both those sensors that are directly descriptive of a respective aspect of environmental characteristics inside the portion of interest and those sensors that are indirectly descriptive of a respective aspect of environmental characteristics inside the portion of interest. In this regard, along the lines discussed in the foregoing, the learning procedure may not consider the respective locations of the first plurality of sensors with respect to the portion of interest or otherwise but rather relies on their contribution to defining the initial model, as discussed in the following.

In an example, derivation of the model may rely on a machine learning model known in the art, such as an artificial neural network (ANN). In other examples, derivation of the model may rely on a linear programming technique or on a statistical model known in the art. In both scenarios the derivation of the model preferably relies on reference data that is descriptive of the one or more aspects of the environmental conditions the initial model serves to estimate or predict in the portion of interest within the one or more spaces, where the reference data covers the training period. In terms of learning, the reference data may be considered to represent a 'ground truth' with respect to the underlying aspects of environmental conditions e.g. in context of a supervised learning procedure. Hence, the learning procedure may aim at deriving the initial model as one that estimates or predicts the one or more aspects of the environmental conditions in the portion of interest within the one or more spaces as accurately as possible in view of the reference data obtained for the portion of interest within the one or more spaces.

Characteristics and origin of the reference data may depend on the one or more aspects of the environmental conditions the model serves to estimate or predict. Non-limiting examples with respect to origin of the reference data include reference data received from or derived on basis of data acquired via another system operating in the one or more spaces (such as an access control system applied in the one or more spaces or a positioning system applied in the one or more spaces), reference data obtained via measurements carried out in the one or more spaces using further sensors such as one or more cameras or one or more radar devices, reference data acquired via a human operator, etc. In an example, the reference data may comprise respective indications of the occupancy status and/or the number of people in the portion of interest with in the one or more spaces obtained via an access control system operated in the one or more spaces (e.g. a 'door counter'), via observations obtained from a human observer, via a room reservation system and/or calendar entries pertaining to the portion of interest, etc. In another example, the refence data may originate from CO₂ level measurements, air quality measurements of other type and/or sound pressure level measurements carried out in the portion of interest within the one or more spaces.

Referring back to operations pertaining to block 204, evaluation of the strength of the match between a time series of sensor values included in the learning data and the initial model resulting from the learning procedure may be carried out separately for each of the first plurality of sensors. The evaluation may aim at identifying those ones of the first plurality of sensors that have the strongest contribution in derivation of the model and, consequently, may be considered as ones that serve to best represent the environmental conditions that are relevant for derivation and application of the model. Additionally or alternatively, the evaluation may aim at identifying those ones of the first plurality of sensors that have the smallest contribution or that have no contribution at all in derivation of the model and that, consequently, may be omitted from derivation and/or application of the model. In this regard, the evaluation may comprise deriving, for each of the first plurality of sensors, a respective similarity measure that is descriptive of similarity between the time series of sensor values originating from the respective sensor and a temporally corresponding output of the model over the training period. As an example in this regard, the similarity measure for a given sensor may comprise a binary indication that indicates whether the respective sensor matches the model or does not match the model. In another example, the similarity measure for a given sensor may comprise a correlation between the time series of sensor values originating from the respective sensor and the output of the model, whereas in a further example the similarity measure for a given sensor may comprise and/or be based on one or more weights assigned to the time series of sensor values originating from the respective sensor in the course of derivation of the model.

According to an example, assuming usage of an ANN model in the learning procedure, the respective similarity measure for a given sensor may be derived on basis of one or more neurons (or corresponding components) of the ANN model. In such an approach, the similarity measure for the given sensor may be derived via comparing activations of said one or more neurons of the ANN model to the time series of sensor values originating from the given sensor. In a non-limiting example, the similarity measure may comprise a value that is descriptive of correlation between the time series of sensor values originating from the given sensor and (a corresponding time series of) activations of said one or more neurons. In this regard, the derivation of the similarity measure may consider the correlation throughout the training period, whereas in another example the derivation of the similarity measure may consider the correlation within a plurality of time segments of the time series of sensor values originating from the given sensor within the training period, which time segments represent respective occurrences of one or more different repeating patterns of sensor values identified in the time series of sensor data originating from the given sensor.

In another example, assuming usage of a state-space decomposition model in the learning procedure, the respective similarity measure for a given sensor may be derived via a statistical analysis carried out for fitted coefficients of the state-space model components. In this regard, the statistical analysis may apply a suitable analysis technique known in the art, such as the Akaike information criterion (AIC), the Bayesian information criterion (BIC) or the Ljung-Box test (LB) with statistical hypothesis testing such as the z-test. Such an approach may be applicable to sensor data of any type, while it may be especially well-suited of sensor data originating from an occupancy sensor.

Referring back to operations pertaining to block 206, selection of the second plurality of sensors as the subset of the first plurality of sensors may be carried out based at least in part on the respective strengths of the matches between the respective time series of sensor values obtained for the first plurality of sensors and the model obtained via the initial learning procedure. In particular, the selection may aim at selecting those ones of the first plurality of sensors that have the most significant contribution in derivation of the model. As an example in this regard, the strength of the match may be indicated via the similarity measure and the selection may rely on one or more predefined criteria pertaining to the respective similarity measures derived for the first plurality of sensors. Non-limiting examples concerning usage of such selection criteria to define the subset of the first plurality of sensors include the following:
- Selecting those ones of the first plurality of sensors for which the respective similarity measure exceeds a first predefined threshold.
- Excluding those ones of the first plurality of sensors for which the respective similarity measure is below a second first predefined threshold.

The respective time series of sensor values originating from the second plurality of sensors defined as the subset of the first plurality of sensor may serve as a further learning data to be considered when applying the model (cf. block 208). Regardless of the one or more criteria applied in selection of the subset, the number of sensors included in the second plurality of sensors may be denoted as *N*₂, where *N*₂ ≤ *N*₁. Hence, depending on the circumstances the second plurality of sensors may, in some scenarios, include all the sensors of the first plurality of sensors, whereas in a typical scenario the second plurality of sensors includes a limited subset of the sensors included in the first plurality of sensors, thereby enabling savings in storage space required for storing the sensor data required for application of the model since only the respective time series of sensor values for the second plurality of sensors are necessary for application of the model and possibly also reducing the computational load arising from application of the model due to reduced amount of sensor data input to the model. On the other hand, the since the second plurality of sensors includes those ones of the first plurality of sensors that are found to have the most significant contribution to derivation of the model, they may be considered as ones that enable application of the model without significantly compromising accuracy and/or reliability of the model.

Along the lines described for the first plurality of sensors in the foregoing, the second plurality of sensors considered in the further learning procedure may be located inside and/or outside the portion of interest within the one or more spaces, thereby enabling taking into account both those sensors that have local significance (inside the portion of interest) and those sensors that have 'global' significance (across the one or more spaces). In this regard, the application of the model may not consider the respective locations of the second plurality of sensors with respect to the portion of interest or otherwise but rather relies on their significance in reflecting the one or more aspects of environmental conditions the model serves to estimate or predict regardless of respective locations of the second plurality of sensors.

Referring back to operations pertaining to block 208, the model obtained via the learning procedure according to blocks 202 to 206 may be subsequently applied to estimate or predict the one or more aspects of the environmental conditions in the portion of interest within the one or more spaces the lighting system 100, 100' serves to illuminate, thereby providing information that may be applicable in controlling one or more aspects of the building automation system. The model may be operated, for example, by the server 103 (e.g. under control of and/or based on information received from the gateway 102) or by the gateway 102. Nevertheless, the model relies on the respective time series of sensor data originating from the second plurality of sensors, obtained in the course of operation of the lighting system 100, 100' after derivation of the model (e.g. after the time instant *t*_{end}).

The manner of using the model and/or a choice of an entity of the lighting system 100, 100' applying the model may depend on the one or more aspects of the environmental conditions the model serves to estimate or predict. Non-limiting examples of applying the model include the following:
- The model may be applicable to estimate the current occupancy status in the portion of interest in the one or more spaces and e.g. the gateway 102 and/or the lighting control server 103 may apply the model and control respective light output from at least one of the luminaires 120-k located in the portion of interest in accordance with the estimated occupancy status.
- The model may be applicable to estimate the current or future number of people in the portion of interest in the one or more spaces and e.g. the gateway 102 and/or the lighting control server 103 may apply the model to derive an estimate of the current or future number of people in the portion of interest and provide this information to another system or function (such as access control and/or the HVAC system) available in the one or more spaces to enable adjusting its operation accordingly
- The model may be applicable to estimate the current or future air quality in the portion of interest in the one or more spaces and e.g. the gateway 102 and/or the lighting control server 103 may apply the model to derive an estimate of the current or future air quality in the portion of interest and provide this information to another system or function (such as the HVAC system) available in the one or more spaces to enable adjusting its operation accordingly.
- Regardless of the output of the model, an entity of the lighting system such as the gateway 102 or the lighting control server 103 may be arranged to monitor the respective sensor data originating from the second plurality of sensors in the course of applying the model and to carry out a predefined action in response to one or more of the second plurality of sensors providing sensor data that does not match the model (e.g. respective sensor data deviates from an output of the model by more than a predefined threshold) and/or in response to one or more of the second plurality of sensors providing sensor data exhibiting patterns that are different from those observed in the past, e.g. in the learning data for the respective one or more sensors. In this regard, the predefined action may comprise issuing an alert or notification with respect to a suspiciously behaving one or more sensors, sending a notification in this regard to these one more sensors, and/or triggering another learning procedure using the first plurality of sensors (cf. block 202) to account for the changes in environmental characteristics indicated by the sensor data originating from these one or more sensors. In case a suspiciously behaving sensor is provided in an integrated sensor unit 140-j that is provided together with a luminaire 120-k, the notification may be transmitted via (the lighting control device 110-k in) the luminaire 120-k and the luminaire 120-k may be respond to the notification e.g. by disabling local control that relies on the suspiciously behaving sensor.

In the foregoing, the learning procedure described via references to blocks 202 to 206 applies the learning data comprising the respective time series of sensors values originating from the first plurality of sensors throughout the learning. In another example, the learning procedure may be carried out in two stages, e.g. such that an initial learning procedure to define an initial model of the one or more aspects of environmental conditions in the portion of interest within the one or more spaces is carried out as described above with references to block 202, followed by a further learning procedure to define a refined model of the one or more aspects of environmental conditions that is carried based on the respective time series of sensor values originating from the second plurality of sensors. Consequently, the refined model may serve as the model to be applied in context of operations of block 208.

In such a scenario, the training period may be split into a first sub-period from the time instant *t*_{end} to *t*ᵢₙₜ having a first duration *T*_{train,1} and a second sub-period from *t*ᵢₙₜ to *t*_{end} having a second duration and *T*_{train,2}, whereas the learning data for the initial learning procedure comprises, for each sensor of the first plurality of sensors, a portion of the respective time series of sensor values that covers the first sub-period and the learning data for the further learning procedure comprises, for each sensor of the second plurality of sensors, a portion of the respective time series of sensor values that covers the second sub-period. Since the second plurality of sensors typically includes a smaller number of sensors than the first plurality of sensors, such an approach enables savings in computational load required in carrying out the further training procedure (in comparison to using the sensor data from the first plurality of sensors) as well as savings in storage space required for storing the sensor data required for the further learning procedure and for application of the model and possibly also reducing the computational load arising from application of the model due to reduced amount of sensor data input to the model. On the other hand, the since the second plurality of sensors includes those ones of the first plurality of sensors that are found to have the most significant contribution to derivation of the initial model, they may be considered as ones that enable deriving the refined model at a reduced computational load without compromising accuracy and/or reliability of the refined model.

In an example, the application of two-stage training procedure may be conditional to the number of sensors (*N*₂) included in the second plurality of sensors. As an example in this regard, the initial training period may be followed by the further training period in response to the number of sensors included in the second plurality of sensors is smaller than a predefined threshold. Herein, the predefined threshold may be defined as an absolute number of sensors or as a percentage of the number of sensors (Ni) included in the first plurality of sensors.

Along the lines described in the foregoing, the learning procedure in accordance with blocks 202 to 206 may be carried out, for example, in response to a request or command by an operator of the lighting system 100, 100'. In another example, the learning procedure may be carried out repeatedly according to a predefined schedule, e.g. at predefined time intervals. In this regard, the time interval may be, for example, in a range of one month to a year, e.g. six months.

Referring back to operations pertaining to block 206 with respect to selection of the second plurality of sensors, those sensors of the first plurality of sensors that are not selected to the second plurality of sensors constitute a third plurality of sensors. In this regard, the second plurality of sensors may be considered to constitute a preferred subset of the first plurality of sensors, whereas the third plurality of sensors may be considered to constitute a non-preferred subset of the first plurality of sensors in terms of derivation of the model. In other words, the third plurality of sensors include those ones of the first plurality of sensors that are found to have only a small contribution or that are found to have no contribution to derivation of the model and, hence, are sensors that may be ignored in application of the model.

According to an example, at least part of the third plurality of sensors may be disabled or even completely removed from the lighting system 100, 100'. As an example in this regard, the lighting system 100, 100' may be originally designed and/or installed with an excess number of sensors and/or (stand-alone) sensor units 140-j for the purpose of collecting sensor data for derivation of the models, whereas the third plurality of sensors identified via the learning procedure are ones that are not producing sensor data that is relevant to the model and, consequently, at least some of these sensors and/or (stand-alone) sensor units 140-j that are found not to contribute to the model may be disabled or completely removed (e.g. uninstalled) from lighting system 100, 100'. In contrast, those ones of the third plurality of sensors that are applied for local lighting control in one of the luminaires 120-k (e.g. ones included in the (integrated) sensor unit 140-j provided together with one of the luminaires 120-k) may not be disabled or removed even though they may be irrelevant in terms of the model.

According to another example, the entity of the lighting system 100, 100' applying the model, e.g. the gateway 102 and/or the server 103, may monitor the respective time series of sensor values received from the second plurality of sensors after derivation of the model and to take predefined action in response to one or more of the second plurality of sensors providing sensor data exhibiting patterns that are different from those observed in the past, e.g. in the (most recently applied) learning data for the respective one or more sensors. In this regard, examples of such predefined action include issuing an alert concerning unexpected behavior of one or more sensors, ignoring sensor data received from said one or more sensors in application of the model, disabling operation of said one or more sensors, and/or disabling any lighting control actions (directly) relying on sensor data received from said one or more sensors. In a further example, predefined action may comprise triggering another learning procedure to account for changed behavior observed by said one or more sensors. As a non-limiting example, possible mismatch between the sensor data received from the one or more of the second plurality of sensors and the model may be detected via observing sensor data that deviates from an output of the model by more than a predefined threshold.

In the foregoing, the learning procedure for deriving the model and the application of the model are described with references to the gateway 102 and/or the server 103. However, in another example, the lighting control device 110-k of a luminaire 120-k of the lighting system 100 having an integrated sensor unit 140-j provided therewith may carry out both derivation of the model and application of the model locally. In such a scenario, the luminaire 120-k may apply the communication means in the lighting control device 110-k to transmit status messages to other ones of the plurality of luminaires 120 and to receive status messages from the other ones of the plurality of luminaires 120. In this regard, the status messages transmitted received at the luminaire 120-k may comprise sensor indications originating from one or more other ones of the plurality of luminaries 120, thereby enabling the lighting control device 110-k therein to store a respective time series of sensor values for other ones of the plurality of luminaires 120.

Still referring to the luminaire 120-k having the (integrated) sensor unit 140-j provided therewith, the lighting control device 110-k therein may apply data received from one or more sensors of the sensor unit 140-j to locally control the light output of the luminaire 120-k. As an example in this regard, the lighting control device 100-k may apply the occupancy indications derived based on the sensor signal received from the occupancy sensor provided in the sensor unit 140-j to locally control the light output from the luminaire 120-k, e.g. such that the light output is switched or kept on in as a response to the locally-derived occupancy indications indicating occupancy and that the light output is switched or kept off as a response to the locally-derived occupancy indications indicating non-occupancy. Moreover, the lighting control device 100-k in the luminaire 120-k may follow occupancy indications originating from respective ones of the plurality of sensor units 140 associated with (e.g. integrated to) respective one of the plurality of luminaires 120. As an example in this regard, the luminaire 120-k may be assigned to the same luminaire group with one or more of the other ones of the plurality of luminaires 120 and the lighting control device 110-k therein may be further arranged to switch or keep on the light output from the luminaire 120-k as a response to any of the other luminaires assigned to the same luminaire group with the luminaire 120-k indicating occupancy. In another example, additionally or alternatively, the luminaire 120-k may be a self-learning one where the lighting control device 110-k may have learned to follow actions of certain other luminaires of the lighting system 100 located in its neighborhood, for example as described in EP 27434031 A1. Such an approaches ensure that sufficient light output is provided in the area in case of a respective occupancy sensor serving any of the grouped luminaires detects occupancy.

With such a setting, the lighting control device 110-k in the luminaire 120-k may apply the method 200 described in the foregoing to derive and apply a model that serves to estimate current occupancy in the area served by the luminaires in the same luminaire group and via application of such model the lighting control device 110-k may verify correct operation of the occupancy sensor provided in the integrated sensor unit 140-j provided together with the luminaire 120-k: in case the occupancy indication derived based on the sensor signal received from the occupancy sensor provided in the sensor unit 140-j is repeatedly in disagreement with the output of the model, the lighting control device 110-k may disable the local control of light output in dependence of the sensor signal received from the occupancy sensor provided in the sensor unit 140-j and may control switching the light output on or off based on the occupancy indications received from the other luminaires assigned in the same luminaire group with the luminaire 120-k. While usage of the occupancy sensor for switching the light output on or off is used as an example in this regard, this readily generalizes to any locally applied lighting control action by the lighting control device 110-k that is based on any sensor signal received from the sensor unit 140-j and, hence, the lighting control device 110-k may disable any lighting control actions relying on locally obtained sensor signals from the sensor unit 140-j in response to finding those sensor signals to be in disagreement with the output of the model.

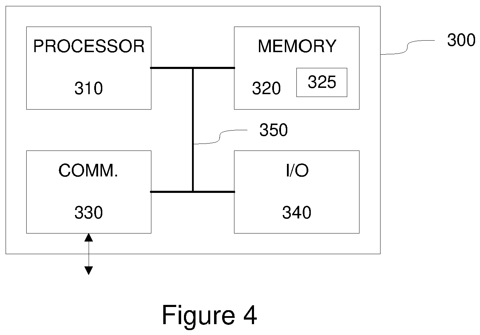

Figure 4 schematically illustrates some components of an apparatus 300 that may be employed to implement operations described with references to any of the lighting control device 110-k, the lighting control means in the gateway 102 or the analysis means in the lighting control server 103. The apparatus 300 comprises a processor 310 and a memory 320. The memory 320 may store data and computer program code 325. The apparatus 300 may further comprise communication means 330 for wired or wireless communication with other apparatuses and/or user I/O (input/output) components 340 that may be arranged, together with the processor 310 and a portion of the computer program code 325, to provide the user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of a respective one of the lighting control device 110-k, the lighting control means in the gateway 102 or the analysis means in the lighting control server 103. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of a respective one of the lighting control device 110-k, the lighting control means in the gateway 102 or the analysis means in the lighting control server 103 when loaded into the processor 310. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of a respective one of the lighting control device 110-k, the lighting control means in the gateway 102 or the analysis means in the lighting control server 103. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of a respective one of the lighting control device 110-k, the lighting control means in the gateway 102 or the analysis means in the lighting control server 103.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of a respective one of the lighting control device 110-k, the lighting control means in the gateway 102 or the analysis means in the lighting control server 103. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A method (200) in a lighting system (100, 100') comprising a plurality of luminaires (120) arranged for illuminating one or more spaces and a plurality of sensor units (140), each including respective one or more sensors arranged to observe respective environmental characteristics in their respective locations in said one or more spaces, the method (200) comprising:
carrying out (202) a learning procedure to define a model of one or more aspects of environmental conditions in a portion of said one or more spaces based on respective time portions of a respective plurality of time series of sensor values originating from a first plurality of said sensors,
**characterized in that** the method (200) comprises:
evaluating (204), for each of said first plurality of said sensors, a respective strength of a match between the time series of sensor values originating from the respective sensor and said model;
selecting (206) a second plurality of said sensors as a subset of the first plurality of said sensors based at least in part on the respective strengths of the matches between the time series of sensor values and the model; and
applying (208) said model to control one or more aspects of a building automation system based on a further plurality of time series of sensor values received from the second plurality of said sensors, each respective time series of sensor values received after said time portions of the respective plurality of time series of sensor values originating from the first plurality of said sensors.

2. A method (200) according to claim 1,
wherein said learning procedure comprises defining an initial learning procedure carried out based on respective first time portions of said plurality of time series of sensor values originating from the first plurality of said sensors that covers a first sub-period of said training period, and
wherein the method (200) further comprises carrying out a further learning procedure to define said model based on respective second time portions of the respective plurality of time series originating from the second plurality of said sensors.

3. A method (200) according to claim 2, wherein one of the following applies:
the second time portions follow in time the respective first time portions,
the second time portions include at least part of the respective first time portions.

4. A method (200) according to claim 1 or 3, wherein said model serves to estimate or predict said one or more aspects of environmental conditions in said portion of said one or more spaces and wherein said one or more aspects include one of the following:
current one or more aspects of environmental conditions in said portion of said one or more spaces,
future one or more aspects of environmental conditions in said portion of said one or more spaces.

5. A method (200) according to any of claims 1 to 3, wherein said one or more aspects of environmental conditions in said portion of said one or more spaces include one or more of the following:
an occupancy status in said portion of said one or more spaces,
the number of people in said portion of said one or more spaces,
a measure of air quality in said portion of said one or more spaces,
a sound pressure level in said portion of said one or more spaces.

6. A method (200) according any of claims 1 to 4, wherein each of said plurality of sensor units (140) comprise one or more of the following:
an occupancy sensor for monitoring an occupancy status in a respective location in said one or more spaces,
a light sensor for measuring an ambient light level in a respective location in said one or more spaces,
a carbon dioxide sensor for measuring a carbon dioxide level in a respective location in said one or more spaces,
a volatile organic compound, VOC, sensor for measuring a respective VOC level in a respective location in said one or more spaces,
a humidity sensor for measuring humidity level in a respective location in said one or more spaces,
a temperature sensor for measuring temperature level in a respective location in said one or more spaces,
a pressure sensor for measuring air pressure level in a respective location in said one or more spaces,
a microphone for capturing audio signals in a respective location in said one or more spaces.

7. A method (200) according to any of claims 1 to 6, wherein the learning procedure comprises usage of one of the following:
a machine learning model,
a linear programming technique.

8. A method (200) according to any of claims 1 to 7, wherein said selecting (206) comprises deriving, for each of said sensors, a respective similarity measure that is descriptive of similarity between the time series of sensor values originating from the respective sensor and a temporally corresponding output of said model and one of the following:
selecting those ones of the first plurality of said sensors for which the respective similarity measure exceeds a first predefined threshold,
excluding those ones of the first plurality of said sensors for which the respective similarity measure is below a second predefined threshold.

9. A method (200) according to any of claims 1 to 8, wherein applying (208) said model comprises one of the following:
controlling light output from at least one of said plurality of luminaires (120) based on said model,
providing information derived via usage of said model to assist operation of one or more other systems operated in said one or more spaces.

10. A method (200) according to any of claims 1 to 9,
further comprising deriving a third plurality of said sensors as those sensors of the first plurality of said sensors that are not selected to the second plurality of said sensors,
wherein applying (208) said model comprises one of disabling or uninstalling at least one of said third plurality of said sensors.

11. A method (200) according to any of claim 1 to 10, further comprising:
monitoring respective plurality of time series of sensor values from the second plurality of sensors after derivation of said model;
taking predefined action in response to one or more of the second plurality of said sensors providing sensor data exhibiting patterns that are different from those observed in the past and/or in response to one or more of the second plurality of said sensors providing sensor data that does not match said model.

12. A method (200) according to claim 11, wherein the predefined action comprises one of the following:
issuing an alert concerning unexpected behaviour of said one or more sensors,
ignoring the respective time series of sensor values received from said one or more sensors in application of said model,
disabling operation of said one or more sensors,
disabling any lighting control actions relying on respective time series of sensor values received from said one or more sensor,
carrying out a further learning procedure to account for observed changes in the respective time series of sensor data received from said one or more sensors.

13. A computer program (325) computer readable program code configured to cause performing at least the method according any of claims 1 to 12 when said program code is executed on one or more computing apparatuses (102, 103, 300).

14. A apparatus (102, 103) for controlling one or more aspects of a building automation system based at least in part on sensor data obtained from a lighting system (100, 100') comprising a plurality of luminaires (120) arranged for illuminating one or more spaces and a plurality of sensor units (140), each including respective one or more sensors arranged to observe respective environmental characteristics in their respective locations in said one or more spaces, the apparatus (102, 103) comprising means for performing the following:
carry out a learning procedure to define a model of one or more aspects of environmental conditions in a portion of said one or more spaces based on respective time portions of a respective plurality of time series of sensor values originating from a first plurality of said sensors ,
**characterized in that** the apparatus (102, 103) comprises means for performing the following:
evaluate, for each of said first plurality of said sensors, a respective strength of a match between the time series of sensor values originating from the respective sensor and said model;
select a second plurality of said sensors as a subset of the first plurality of said sensors based at least in part on the respective strengths of the matches between the time series of sensor values and the model; and
apply said model to control one or more aspects of the building automation system based on a further plurality of time series of sensor values received from the second plurality of said sensors, each respective time series of sensor values received after said respective time portions of the respective plurality of time series of sensor values originating from the first plurality of said sensors.

15. A lighting system (100, 100') comprising an apparatus according to claim 14, the plurality of luminaires (120) and the plurality of sensor units (140)

## Patentansprüche

1. Verfahren (200) in einem Beleuchtungssystem (100, 100'), das eine Vielzahl von Leuchten (120), die zur Beleuchtung eines oder mehrerer Räume angeordnet sind, und eine Vielzahl von Sensoreinheiten (140) umfasst, die jeweils einen oder mehrere Sensoren einschließen, die so angeordnet sind, dass sie jeweilige Umwelteigenschaften an ihren jeweiligen Stellen in dem einen oder den mehreren Räumen beobachten, das Verfahren (200) umfassend:
Ausführen (202) eines Lernverfahrens, um ein Modell eines oder mehrerer Gesichtspunkte der Zustände in einem Abschnitt des einen oder der mehreren Räume zu definieren, basierend auf jeweiligen Zeitabschnitten einer jeweiligen Vielzahl von Zeitreihen von Sensorwerten, die von einer ersten Vielzahl der Sensoren stammen,
**dadurch gekennzeichnet, dass** das Verfahren (200) Folgendes umfasst:
Auswerten (204) einer jeweiligen Stärke einer Übereinstimmung zwischen der Zeitreihe von Sensorwerten, die von dem jeweiligen Sensor stammen, und dem Modell für jeden der ersten Vielzahl der Sensoren;
Auswählen (206) einer zweiten Vielzahl der Sensoren als Untersatz der ersten Vielzahl der Sensoren, basierend mindestens teilweise auf den jeweiligen Stärken der Übereinstimmungen zwischen der Zeitreihe der Sensorwerte und dem Modell;
und
Anwenden (208) des Modells, um einen oder mehrere Gesichtspunkte eines Gebäudeautomationssystems zu steuern, basierend auf einer weiteren Vielzahl von Zeitreihen von Sensorwerten, die von der zweiten Vielzahl der Sensoren empfangen werden, wobei jede jeweilige Zeitreihe von Sensorwerten nach den Zeitabschnitten der jeweiligen Vielzahl von Zeitreihen von Sensorwerten empfangen wird, die von der ersten Vielzahl der Sensoren stammen.

2. Verfahren (200) nach Anspruch 1,
wobei das Lernverfahren das Definieren eines anfänglichen Lernverfahrens umfasst, das auf der Grundlage jeweiliger erster Zeitabschnitte der Vielzahl von Zeitreihen von Sensorwerten ausgeführt wird, die von der ersten Vielzahl der Sensoren stammen, die eine erste Unterperiode der Trainingsperiode abdecken,und
wobei das Verfahren (200) ferner das Durchführen eines weiteren Lernverfahrens umfasst, um das Modell basierend auf jeweiligen zweiten Abschnitten der jeweiligen Vielzahl von Zeitreihen zu definieren, die von der zweiten Vielzahl der Sensoren stammen.

3. Verfahren (200) nach Anspruch 2, wobei einer der folgenden Punkte zutrifft:
die zweiten Zeitabschnitte folgen zeitlich auf die jeweiligen ersten Zeitabschnitte,
die zweiten Zeitabschnitte zumindest einen Teil der jeweiligen ersten Zeitabschnitte einschließen.

4. Verfahren (200) nach Anspruch 1 oder 3, wobei das Modell dazu dient, den einen oder die mehreren Gesichtspunkte der Umgebungszustände in dem Abschnitt des einen oder der mehreren Räume abzuschätzen oder vorherzusagen, und wobei der eine oder die mehreren Gesichtspunkte einen der folgenden einschließen:
einen oder mehrere Gesichtspunkte der Umgebungszustände in dem Abschnitt des einen oder der mehreren Räume,
einen oder mehrere Gesichtspunkte der Zustände in dem besagten Abschnitt des besagten einen oder mehreren Räumen.

5. Verfahren (200) nach einem der Ansprüche 1 bis 3, wobei der eine oder die mehreren Gesichtspunkte der Umgebungszustände in dem Abschnitt des einen oder der mehreren Räume einen oder mehrere der folgenden Punkte einschließen:
einen Belegungsstatus in diesem Abschnitt des einen oder der mehreren Räume,
die Anzahl der Personen in dem Abschnitt des einen oder mehreren Räumen,
ein Maß für die Luftqualität in diesem Abschnitt des einen oder der mehreren Räume,
einen Schalldruckpegel in dem Abschnitt des einen oder mehreren Räumen.

6. Verfahren (200) nach einem der Ansprüche 1 bis 4, wobei jede der Vielzahl von Sensoreinheiten (140) eines oder mehrere der folgenden Elemente umfasst:
einen Belegungssensor zur Überwachung eines Belegungsstatus an einer entsprechenden Stelle in dem einen oder den mehreren Räumen,
einen Lichtsensor zur Messung des Umgebungslichtpegels an einer entsprechenden Stelle in dem einen oder den mehreren Räumen,
einen Kohlendioxidsensor zur Messung des Kohlendioxidgehalts an einer entsprechenden Stelle in dem einen oder den mehreren Räumen,
einen Sensor für flüchtige organische Verbindungen (VOC) zum Messen eines entsprechenden VOC-Pegels an einer entsprechenden Stelle in dem einen oder mehreren Räumen,
einen Feuchtigkeitssensor zur Messung des Feuchtigkeitsniveaus an einer entsprechenden Stelle in dem einen oder mehreren Räumen,
einen Temperatursensor zur Messung des Temperaturniveaus an einer entsprechenden Stelle in dem einen oder den mehreren Räumen,
einen Drucksensor zur Messung des Luftdruckniveaus an einer entsprechenden Stelle in dem einen oder den mehreren Räumen,
ein Mikrofon zum Aufnehmen von Audiosignalen an einer entsprechenden Stelle in dem einen oder mehreren Räumen.

7. Verfahren (200) nach einem der Ansprüche 1 bis 6, wobei das Verfahren die Verwendung von einem der folgenden umfasst:
ein Modell für maschinelles Lernen,
eine lineare Programmiertechnik.

8. Verfahren (200) nach einem der Ansprüche 1 bis 7, wobei das Auswählen (206) das Ableiten eines jeweiligen Ähnlichkeitsmaßes für jeden der Sensoren umfasst, das die Ähnlichkeit zwischen der Zeitreihe von Sensorwerten, die von dem jeweiligen Sensor stammen, und einem zeitlich entsprechenden Ausgangswert des Modells und einem der folgenden beschreibt:
Auswählen derjenigen Sensoren aus der ersten Vielzahl von Sensoren, für die das jeweilige Ähnlichkeitsmaß einen ersten vordefinierten Schwellenwert überschreitet,
Ausschließen derjenigen Sensoren aus der ersten Vielzahl von Sensoren, für die das jeweilige Ähnlichkeitsmaß unter einem zweiten vordefinierten Schwellenwert liegt.

9. Verfahren (200) nach einem der Ansprüche 1 bis 8, wobei das Anwenden (208) des Modells eines der folgenden umfasst:
Steuern der Lichtleistung von mindestens einer der mehreren Leuchten (120) basierend auf dem Modell,
Bereitstellen von Informationen, die mittels der Verwendung des Modells abgeleitet wurden, um den Vorgang eines oder mehrerer anderer Systeme zu unterstützen, die in dem einen oder den mehreren Räumen betrieben werden.

10. Verfahren (200) nach einem der Ansprüche 1 bis 9,
das ferner das Ableiten einer dritten Vielzahl der Sensoren als diejenigen Sensoren der ersten Vielzahl der Sensoren umfasst, die nicht für die zweite Vielzahl der Sensoren ausgewählt sind,
wobei das Anwenden (208) des Modells das Deaktivieren oder Deinstallieren mindestens eines der dritten Vielzahl der Sensoren umfasst.

11. Verfahren (200) nach einem der Ansprüche 1 bis 10, ferner umfassend:
Überwachen der jeweiligen Vielzahl von Zeitreihen von Sensorwerten aus der zweiten Vielzahl von Sensoren nach der Ableitung des Modells;
Ergreifen einer vordefinierten Aktion als Antwort auf einen oder mehrere der zweiten Vielzahl der Sensoren, die Sensordaten liefern, die andere Muster aufweisen als die in der Vergangenheit beobachteten und/oder als Antwort auf einen oder
mehrere von der zweiten Vielzahl der Sensoren, die Sensordaten liefern, die nicht mit dem Modell übereinstimmen.

12. Verfahren (200) nach Anspruch 11, wobei die vordefinierte Aktion eines der folgenden umfasst:
Warnen über ein unerwartetes Verhalten des einen oder der mehreren Sensoren ausgibt,
Ignorieren der jeweiligen Zeitreihen der von dem einen oder den mehreren Sensoren empfangenen Sensorwerte bei der Anwendung des Modells,
Deaktivieren des Vorgangs des einen oder der mehreren Sensoren,
Deaktivieren von Beleuchtungssteuerungsaktionen, die auf den jeweiligen Zeitreihen von Sensorwerten beruhen, die von dem einen oder mehreren Sensoren empfangen wurden,
Ausführen eines weiteren Lernverfahrens, um beobachtete Änderungen in der jeweiligen Zeitreihe von Sensordaten zu berücksichtigen, die von dem einen oder den mehreren Sensoren empfangen wurden.

13. Computerprogramm (325), computerlesbarer Programmcode, der so konfiguriert ist, dass er die Durchführung mindestens des Verfahrens nach einem der Ansprüche 1 bis 12 bewirkt, wenn der Programmcode auf einem oder mehreren Geräten (102, 103, 300) ausgeführt wird.

14. Gerät (102, 103) zur Steuerung eines oder mehrerer Gesichtspunkte eines Gebäudeautomationssystems, das mindestens teilweise auf Sensordaten basiert, die von einem Beleuchtungssystem (100, 100') ermittelt werden, das eine Vielzahl von Leuchten (120), die zur Beleuchtung eines oder mehrerer Räume angeordnet sind, und eine Vielzahl von Sensoreinheiten (140) umfasst, die jeweils einen oder mehrere Sensoren einschließen, die so angeordnet sind, dass sie entsprechende Umgebungseigenschaften an ihren jeweiligen Stellen in dem einen oder den mehreren Räumen beobachten, wobei das Gerät (102, 103) Mittel zur Durchführung des Folgenden umfasst:
Durchführen eines Lernverfahrens, um ein Modell eines oder mehrerer Gesichtspunkte der Zustände der Umgebung in einem Abschnitt des einen oder der mehreren Räume zu definieren, das auf entsprechenden Zeitabschnitten einer entsprechenden Vielzahl von Zeitreihen von Sensorwerten basiert, die von einer ersten Vielzahl der Sensoren stammen,
**dadurch gekennzeichnet, dass** das Gerät (102, 103) Mittel zur Durchführung des Folgenden umfasst:
Auswerten einer jeweiligen Stärke einer Übereinstimmung zwischen der Zeitreihe von Sensorwerten, die von dem jeweiligen Sensor stammen, und dem Modell für jeden der ersten Vielzahl der Sensoren;
Auswählen einer zweiten Vielzahl der Sensoren als Untersatz der ersten Vielzahl der Sensoren, basierend mindestens teilweise auf den jeweiligen Stärken der Übereinstimmungen zwischen der Zeitreihe der Sensorwerte und dem Modell; und
Anwenden des Modells zur Steuerung eines oder mehrerer Gesichtspunkte des Gebäudeautomationssystems basierend auf einer weiteren Vielzahl von Zeitreihen von Sensorwerten, die von der zweiten Vielzahl der Sensoren empfangen werden, wobei jede jeweilige Zeitreihe von Sensorwerten nach den jeweiligen Zeitabschnitten der jeweiligen Vielzahl von Zeitreihen von Sensorwerten empfangen wird, die von der ersten Vielzahl der Sensoren stammen.

15. Beleuchtungssystem (100, 100'), umfassend ein Gerät nach Anspruch 14, die Vielzahl von Leuchten (120) und die Vielzahl von Sensoreinheiten (140)

## Revendications

1. Procédé (200) dans un système d'éclairage (100, 100') comprenant une pluralité de luminaires (120) agencés pour éclairer un ou plusieurs espaces et une pluralité d'unités de détection (140), chacune comportant respectivement un ou plusieurs capteurs agencés pour observer des caractéristiques environnementales respectives dans leurs emplacements respectifs dans lesdits un ou plusieurs espaces, le procédé (200) comprenant :
l'exécution (202) d'une procédure d'apprentissage pour définir un modèle d'un ou plusieurs aspects des conditions environnementales dans une partie desdits un ou plusieurs espaces sur la base de parties temporelles respectives d'une pluralité respective de séries temporelles de valeurs de capteur provenant d'une première pluralité desdits capteurs, **caractérisé en ce que** le procédé (200) comprend :
l'évaluation (204), pour chacun de ladite première pluralité desdits capteurs, d'une force respective d'une correspondance entre la série temporelle de valeurs de capteur provenant du capteur respectif et dudit modèle ;
la sélection (206) d'une deuxième pluralité desdits capteurs en tant que sous-ensemble de la première pluralité desdits capteurs sur la base au moins en partie des forces respectives des correspondances entre les séries temporelles de valeurs de capteur et le modèle ; et
l'application (208) dudit modèle pour commander un ou plusieurs aspects d'un système d'automatisation de bâtiment sur la base d'une autre pluralité de séries temporelles de valeurs de capteur reçues de la deuxième pluralité desdits capteurs, chaque série temporelle respective de valeurs de capteur reçue après lesdites parties temporelles de la pluralité respective de séries temporelles de valeurs de capteur provenant de la première pluralité desdits capteurs.

2. Procédé (200) selon la revendication 1,
dans lequel ladite procédure d'apprentissage comprend la définition d'une procédure d'apprentissage initiale exécutée sur la base de premières parties temporelles respectives de ladite pluralité de séries temporelles de valeurs de capteur provenant de la première pluralité desdits capteurs qui couvre une première sous-période de ladite période d'apprentissage, et dans lequel le procédé (200) comprend en outre l'exécution d'une autre procédure d'apprentissage pour définir ledit modèle sur la base de secondes parties temporelles respectives de la pluralité respective de séries temporelles provenant de la deuxième pluralité desdits capteurs.

3. Procédé (200) selon la revendication 2, dans lequel l'un des suivants s'applique :
les secondes portions de temps suivent dans le temps les premières portions de temps respectives,
les secondes portions de temps comportent au moins une partie des premières portions de temps respectives.

4. Procédé (200) selon la revendication 1 ou 3, dans lequel ledit modèle sert à estimer ou à prédire lesdits un ou plusieurs aspects des conditions environnementales dans ladite partie desdits un ou plusieurs espaces et dans lequel lesdits un ou plusieurs aspects comportent l'un des éléments suivants :
un ou plusieurs aspects actuels des conditions environnementales dans ladite partie dudit ou desdits un ou plusieurs espaces,
un ou plusieurs aspects futurs des conditions environnementales dans ladite partie desdits un ou plusieurs espaces.

5. Procédé (200) selon l'une quelconque des revendications 1 à 3, dans lequel lesdits un ou plusieurs aspects des conditions environnementales dans ladite partie dudit ou desdits un ou plusieurs espaces comportent un ou plusieurs des éléments suivants :
un état d'occupation dans ladite partie dudit ou desdits un ou plusieurs espaces,
le nombre de personnes dans ladite portion dudit ou desdits un ou plusieurs espaces,
une mesure de la qualité de l'air dans ladite partie dudit ou desdits un ou plusieurs espaces,
un niveau de pression acoustique dans ladite partie dudit ou desdits un ou plusieurs espaces.

6. Procédé (200) selon l'une quelconque des revendications 1 à 4, dans lequel chacune de ladite pluralité d'unités de capteur (140) comprend un ou plusieurs des éléments suivants :
un capteur d'occupation pour surveiller un état d'occupation dans un emplacement respectif dans lesdits un ou plusieurs espaces,
un capteur de lumière pour mesurer un niveau de lumière ambiante à un emplacement respectif dans lesdits un ou plusieurs espaces,
un capteur de dioxyde de carbone pour mesurer un niveau de dioxyde de carbone à un emplacement respectif dans lesdits un ou plusieurs espaces,
un capteur de composé organique volatil, COV, pour mesurer un niveau de COV respectif à un emplacement respectif dans lesdits un ou plusieurs espaces,
un capteur d'humidité pour mesurer le niveau d'humidité à un emplacement respectif dans lesdits un ou plusieurs espaces,
un capteur de température pour mesurer le niveau de température à un emplacement respectif dans lesdits un ou plusieurs espaces,
un capteur de pression pour mesurer le niveau de pression d'air à un emplacement respectif dans lesdits un ou plusieurs espaces,
un microphone pour capturer des signaux audio dans un emplacement respectif dans lesdits un ou plusieurs espaces.

7. Procédé (200) selon l'une quelconque des revendications 1 à 6, dans lequel la procédure d'apprentissage comprend l'utilisation de l'un des éléments suivants :
un modèle d'apprentissage automatique,
une technique de programmation linéaire.

8. Procédé (200) selon l'une quelconque des revendications 1 à 7, dans lequel ladite sélection (206) comprend la dérivation, pour chacun desdits capteurs, d'une mesure de similarité respective qui décrit la similarité entre les séries temporelles de valeurs de capteur provenant du capteur respectif et une sortie temporellement correspondante dudit modèle et un des éléments suivants :
la sélection de la première pluralité desdits capteurs pour lesquels la mesure de similarité respective dépasse un premier seuil prédéfini,
l'exclusion de ceux de la première pluralité desdits capteurs pour lesquels la mesure de similarité respective est inférieure à un second seuil prédéfini.

9. Procédé (200) selon l'une quelconque des revendications 1 à 8, dans lequel l'application (208) dudit modèle comprend l'une des opérations suivantes :
la commande de la sortie de lumière d'au moins l'un de ladite pluralité de luminaires (120) sur la base dudit modèle,
la fourniture d'informations dérivées via l'utilisation dudit modèle pour assister le fonctionnement d'un ou plusieurs autres systèmes exploités dans lesdits un ou plusieurs espaces.

10. Procédé (200) selon l'une quelconque des revendications 1 à 9,
comprenant en outre la dérivation d'une troisième pluralité desdits capteurs en tant que les capteurs de la première pluralité desdits capteurs qui ne sont pas sélectionnés pour la deuxième pluralité desdits capteurs,
dans lequel l'application (208) dudit modèle comprend l'une de la désactivation ou de la désinstallation d'au moins l'un de ladite troisième pluralité desdits capteurs.

11. Procédé (200) selon l'une quelconque des revendications 1 à 10, comprenant en outre :
la surveillance de la pluralité respective de séries temporelles de valeurs de capteur à partir de la deuxième pluralité de capteurs après dérivation dudit modèle ;
le fait de prendre une action prédéfinie en réponse à un ou plusieurs de la deuxième pluralité desdits capteurs fournissant des données de capteur présentant des modèles qui sont différents de ceux observés dans le passé et/ou en réponse à un ou plusieurs de la deuxième pluralité desdits capteurs fournissant des données de capteur qui ne correspond pas audit modèle.

12. Procédé (200) selon la revendication 11, dans lequel l'action prédéfinie comprend l'une des actions suivantes :
l'émission d'une alerte concernant un comportement inattendu dudit ou desdits un ou plusieurs capteurs, le fait d'ignorer les séries temporelles respectives de valeurs de capteur reçues dudit ou desdits un ou plusieurs capteurs en application dudit modèle,
la désactivation du fonctionnement dudit ou desdits un ou plusieurs capteurs,
la désactivation de toute action de commande d'éclairage reposant sur des séries temporelles respectives de valeurs de capteur reçues dudit ou desdits un ou plusieurs capteurs,
l'exécution d'une autre procédure d'apprentissage pour tenir compte des changements observés dans les séries temporelles respectives de données de capteur reçues dudit ou desdits un ou plusieurs capteurs.

13. Programme informatique (325) code de programme lisible par ordinateur configuré pour provoquer l'exécution d'au moins le procédé selon l'une quelconque des revendications 1 à 12 lorsque ledit code de programme est exécuté sur un ou plusieurs appareils informatiques (102, 103, 300).

14. Appareil (102, 103) pour commander un ou plusieurs aspects d'un système d'automatisation de bâtiment basé au moins en partie sur des données de capteur obtenues à partir d'un système d'éclairage (100, 100') comprenant une pluralité de luminaires (120) agencés pour éclairer un ou plusieurs espaces et une pluralité d'unités de capteurs (140), chacune comportant un ou plusieurs capteurs respectifs agencés pour observer les caractéristiques environnementales respectives dans leurs emplacements respectifs dans lesdits un ou plusieurs espaces, l'appareil (102, 103) comprenant des moyens pour effectuer ce qui suit :
l'exécution d'une procédure d'apprentissage pour définir un modèle d'un ou plusieurs aspects des conditions environnementales dans une partie desdits un ou plusieurs espaces sur la base de parties temporelles respectives d'une pluralité respective de séries temporelles de valeurs de capteur provenant d'une première pluralité desdits capteurs, **caractérisé en ce que** l'appareil (102, 103) comprend des moyens pour effectuer ce qui suit :
l'évaluation, pour chacun de ladite première pluralité desdits capteurs, d'une force respective d'une correspondance entre la série temporelle de valeurs de capteur provenant du capteur respectif et dudit modèle ;
la sélection d'une deuxième pluralité desdits capteurs en tant que sous-ensemble de la première pluralité desdits capteurs sur la base au moins en partie des forces respectives des correspondances entre la série temporelle de valeurs de capteur et le modèle ; et
l'application dudit modèle pour commander un ou plusieurs aspects du système d'automatisation de bâtiment sur la base d'une autre pluralité de séries temporelles de valeurs de capteur reçues de la deuxième pluralité desdits capteurs, chaque série temporelle respective de valeurs de capteur reçue après lesdites parties de temps respectives des pluralité de séries temporelles de valeurs de capteur provenant de la première pluralité desdits capteurs.

15. Système d'éclairage (100, 100') comprenant un appareil selon la revendication 14, la pluralité de luminaires (120) et la pluralité d'unités de capteur (140)
